(19) Europäisches Patentamt
European Patent Office
Office européen des brevets

(11) **EP 3 579 020 B1**

(12) **EUROPÄISCHE PATENTSCHRIFT**

(45) Veröffentlichungstag und Bekanntmachung des Hinweises auf die Patenterteilung:
**31.03.2021   Patentblatt 2021/13**

(51) Int Cl.:
*G01S 15/93* (2020.01)      *G01S 15/10* (2006.01)
*G01S 15/931* (2020.01)

(21) Anmeldenummer: **18176088.5**

(22) Anmeldetag: **05.06.2018**

(54) **VERFAHREN ZUR ERKENNUNG EINES HINDERNISSES MIT HILFE VON REFLEKTIERTEN ULTRASCHALLWELLEN**

METHOD FOR RECOGNITION OF AN OBSTACLE WITH THE AID OF REFLECTED ULTRASONIC WAVES

PROCÉDÉ DE DÉTECTION D'UN OBSTACLE À L'AIDE DES ONDES ULTRASONORES RÉFLÉCHIES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**11.12.2019   Patentblatt 2019/50**

(73) Patentinhaber: **Elmos Semiconductor SE 44227 Dortmund (DE)**

(72) Erfinder: **Spiegel, Egbert 45770 Marl (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**DE-A1- 10 027 828      DE-A1- 19 846 241**

**Beschreibung**

Die Erfindung betrifft ein Verfahren zur Erkennung eines Hindernisses mit Hilfe von reflektierten Ultraschallwellen, wobei dieses Verfahren insbesondere Anwendung als Einparkhilfe für Fahrzeuge findet. Im Speziellen betrifft die Erfindung ein Verfahren zur Erkennung eines Typs von Hindernis insbesondere im Umfeld eines Fahrzeugs.

Die Erkennung eines Hindernisses im Umfeld insbesondere eines Fahrzeugs mit Hilfe der Analyse des empfangenen Echosignals von zuvor ausgesendeten Ultraschallwellen ist grundsätzlich bekannt. Derartige Verfahren haben sich bei automobilen Anwendungen als beispielsweise Einparkhilfen bewährt. Dabei wird bisher zumeist der zeitliche Verlauf des Echosignals analysiert. Charakteristische Zeitverläufe, wie beispielsweise mehr oder weniger stark ausgeprägte Maxima sowie der Zeitverlauf des Echosignals vor und hinter einem Maximum werden als Hindernisse aufgefasst.

Aktuell existieren keine Möglichkeiten, verschiedene Typen von Hindernissen mittels einer statischen Messung voneinander zu unterscheiden. Lediglich der Verlauf des Echosignals kann hinsichtlich auf Hindernisse zurückzuführende Echosignalabschnitte hin verfolgt werden. Dass die Unterscheidung verschiedener Typen von Hindernissen relevant sein kann, zeigt das Beispiel eines Stoppers, d.h. einer Bodenschwelle wie sie insbesondere auf Parkplätzen eingesetzt werden, um dem einparkenden Fahrer zu signalisieren, wie weit er in die Parkbox fahren sollte (nämlich so weit, bis die vorderen oder hinteren Räder den Stopper berühren). Ein derartiges Hindernis zeigt im Verlauf eines Parkvorganges zunächst ein relativ groß ausgeprägtes Echo, dessen Größe allerdings mit zunehmender Annäherung sich stark verringert. Eine solche Bodenschwelle, zu der auch ein Bordstein zählt, kann auch überfahren werden. Die Amplitude eines auf ein höheres Hindernis wie beispielsweise eine Wand oder ein Fahrzeug zurückzuführendes Hindernis dagegen bleibt im Wesentlichen immer gleich groß. Dies gilt im Wesentlichen auch für Pfähle bzw. Pfosten.

Verfahren zur Nutzung reflektierter Ultraschallwellen sind beispielsweise aus DE-A-100 27 828 und DE-A-198 46 241 bekannt.

Aufgabe der Erfindung ist es, ein Verfahren zur Erkennung eines Hindernisses mittels reflektierter Ultraschallwellen anzugeben, mit dessen Hilfe sich verschiedene Typen von Hindernissen voneinander unterscheiden lassen.

Zur Lösung dieser Aufgabe wird mit der Erfindung ein Verfahren zur Erkennung eines Hindernisses mit Hilfe von reflektierten Ultraschallwellen, insbesondere als Einparkhilfe für Fahrzeuge, vorgeschlagen, wobei das Verfahren die folgenden Schritte aufweist:

-    Aussenden eines Ultraschall-Burstsendesignals durch einen Ultraschallsender in einen zu überwachenden Erfassungsbereich

-    Empfangen eines von einem Hindernis im Erfassungsbereich reflektierten Ultraschallsignals durch einen Ultraschallempfänger als Ultraschall-Empfangssignal,
Detektieren mindestens eines auf ein Hindernis zurückzuführenden Echos im Ultraschall-Empfangssignal,
Transformieren des zum Echo gehörenden Echoabschnitts des Ultraschall-Empfangssignals aus dem Zeitbereich in den Frequenzbereich,
Untersuchen des Frequenzspektrums des Echoabschnitts auf das Vorhandensein mindestens eines von mehreren vorgegebenen Spektralmerkmalen, wobei jedes Spektralmerkmal für einen vorbestimmten Typ von Hindernissen und möglicherweise für mindestens einen von mehreren vorbestimmten Typen von Hindernissen repräsentativ ist, und

-    Zuordnen des Echoabschnitts zu einem vorbestimmten Typ von Hindernis.

Sinngemäß wird mit der Erfindung vorgeschlagen, Erkenntnisse über die akustische Abbildung von Hindernissen durch Aussenden von Ultraschallwellen und Empfangen von Reflektionen dieser Ultraschallwellen dazu auszunutzen, verschiedene Hindernisse, die sich insbesondere im Umfeld eines einparkenden Fahrzeuges befinden, voneinander unterscheiden zu können. Dies ist insoweit von Vorteil, als beispielsweise ein Stopper oder eine andere Art von Bodenwelle als Hindernis von beispielsweise einer Wand unterschieden werden sollte; denn eine Bodenwelle oder ein Bordstein lässt sich anders als eine Wand während eines Parkvorgangs durchaus "überfahren", was beispielsweise für ein benachbartes stehendes Fahrzeug selbstverständlich nicht gilt. Problematisch dabei ist, dass die Unterscheidung verschiedener Typen von Hindernissen während z.B. eines Einparkvorgangs anhand des Hüllkurvensignals bzw. anhand des Zeitverlaufs des Echosignals nicht bzw. nicht zuverlässig möglich ist.

Überraschenderweise hat sich gezeigt, dass eine Hindernisunterscheidung jedoch dann möglich ist, wenn die Untersuchung von Echoabschnitten des Ultraschall-Empfangssignals im Frequenzbereich erfolgt. Wie im Rahmen der Entstehung der Erfindung festgestellt werden konnte, erlaubt die Bestimmung der spektralen Momente wie beispielsweise des spektralen Schwerpunkts und der spektralen Breite des Frequenzspektrums eines Echoabschnitts, den Typ eines Hindernisses zu verifizieren.

Bei dem erfindungsgemäßen Verfahren wird durch einen Ultraschallsender ein Ultraschall-Burstsendesignal in einen zu betrachtenden Erfassungsbereich ausgesendet. Aus diesem Erfassungsbereich empfängt ein Ultraschallempfänger das reflektierte Ultraschallsignal als Ultraschall-Empfangssignal, wenn sich im Erfassungsbereich ein Hindernis befindet. Anhand des Ultraschall-Empfangssignal bzw. anhand von dessen Zeitverlauf lässt sich mindestens ein Echoabschnitt detektieren, der auf ein Hindernis zurückzuführen ist. Dies erfolgt beispielsweise durch Vergleich der Signalgröße des Ultraschall-Empfangssignals mit einer Schwelle, die starr ist oder dynamisch nachführbar sein kann. Ein detektierter Echoabschnitt wird erfindungsgemäß aus dem Zeitbereich in den Frequenzbereich transformiert. Das Frequenzspektrum des Echoabschnitts wird auf das Vorhandensein mindestens eines von mehreren vorgegebenen Spektralmerkmalen untersucht, wobei jedes Spektralmerkmal für einen vorbestimmten Typ von Hindernis repräsentativ ist. Es ist aber auch möglich, dass jedes Spektralmerkmal für mehr als einen von mehreren vorbestimmten Typen von Hindernissen repräsentativ ist. Anschließend erfolgt die Zuordnung des Echoabschnitts zu einem vorbestimmten Typ von Hindernis, wobei der Zeitpunkt, zu dem dieser Echoabschnitt im Ultraschall-Empfangssignal auftaucht, für den Abstand des Hindernisses zum Ultraschallempfänger repräsentativ ist. Erfindungsgemäß können Ultraschallsender und Ultraschallempfänger zwei voneinander verschiedener Einheiten oder aber auch eine gemeinsame Einheit, nämlich ein sogenannter Ultraschall-Transducer, sein.

In zweckmäßiger Weiterbildung der Erfindung kann vorgesehen sein, dass ein Maß für die Wahrscheinlichkeit angegeben wird, mit der ein Echoabschnitt einem Typ von Hindernis zuzuordnen ist, oder dass mehrere Wahrscheinlichkeiten gegeben werden, mit denen ein Echoabschnitt verschiedenen Typen von Hindernissen zuzuordnen ist. Bei dieser Weiterbildung der Erfindung wird durch eine zusätzliche Information, nämlich die Wahrscheinlichkeit bzw. die Wahrscheinlichkeitsdichteverteilung angegeben, mit welcher Zuverlässigkeit ein Typ von Hindernis oder ggf. verschiedene Typen von Hindernissen einem detektierten Echoabschnitt zugeordnet werden kann bzw. können.

Ferner kann es zweckmäßig sein, wenn ein erkanntes Hindernis optisch und/oder akustisch und/oder taktil (z.B. Sitz oder Lenkrad eines Fahrzeuges) signalisiert wird, wobei die Signale für vorbestimmte Typen von Hindernissen unterschiedlich sind. Dem das Fahrzeug einparkenden Fahrer kann also auf diese Weise der Typ von Hindernis signalisiert werden.

Wie bereits oben erwähnt, zählen zu den Spektralmerkmalen der spektrale Schwerpunkt und die spektrale Breite des Frequenzspektrums eines Echoabschnitts. Diese beiden Spektralmerkmale lassen sich z.B. in bekannter Weise aus den I- und Q-Signalanteilen einer I/Q-Demodulation ermitteln.

Im Rahmen der Entstehung der Erfindung hat sich gezeigt, dass insbesondere drei verschiedene Typen von Hindernissen anhand von Spektralmerkmalen unterscheidbar sind. Zu diesen verschiedenen Typen von unterscheidbaren Hindernissen gehören als ein erster Typ ein Bordstein, ein Stopper odgl. andere Bodenschwelle, als ein zweiter Typ eine Wand und insbesondere ein Fahrzeug und als ein dritter Typ ein Pfosten oder ein Pfahl wie beispielsweise ein Hinweis- bzw. Verkehrszeichenschild-, Lichtzeichen- oder Laternenpfahl. Es hat sich herausgestellt, dass sich mittels des spektralen Schwerpunkts eines Echoabschnitts eine Bodenschwelle deutlich von sowohl einer Wand als auch einem Pfosten unterscheiden lässt. Die Unterscheidung zwischen Wand und Pfosten hingegen ist anhand des spektralen Schwerpunkts ggf. nicht eindeutig. Demgegenüber aber lässt sich eine Wand deutlich von einer Bodenschwelle und einem Pfahl unterscheiden, wenn man den Echoabschnitt hinsichtlich seiner spektralen Breite untersucht. Die spektrale Breite wiederum lässt die Unterscheidung zwischen einer Bodenschwelle und einem Pfahl kaum zu. Werden also beide Spektralmerkmale herangezogen, um die drei zuvor genannten Typen von Hindernissen voneinander unterscheiden zu können, so ist dies sehr gut möglich, da sich diese drei Typen von Hindernissen innerhalb eines 2D-Diagramms mit auf der einen Achse aufgetragener spektralen Breite und dem spektralen Schwerpunkt auf der anderen Achse auf deutlich voneinander getrennte Bereiche "verteilen".

Die heutzutage in der automobilen Anwendung zum Einsatz kommenden Ultraschallempfänger sind leider recht stark temperaturabhängig. Sofern also Ultraschallempfänger gesetzt werden, deren Sensitivität vergleichsweise stark temperaturabhängig ist, ist es gemäß einer vorteilhaften Weiterbildung der Erfindung von Vorteil, wenn die Detektion eines Echoabschnitts und dessen Transformation in den Frequenzbereich temperaturkompensiert oder temperaturkorrigiert oder in anderer Weise unter Berücksichtigung der aktuellen Temperatur des Ultraschallempfängers erfolgt. Dabei kann es von Vorteil sein, die Temperatur des Ultraschallempfängers messtechnisch oder anhand einer temperaturabhängigen signaltechnischen Eigenschaft zu ermitteln, bezüglich der der Ultraschallempfänger kalibriert ist und auf die das Ultraschallempfangsignal hin untersucht wird. In diesem Zusammenhang sei verwiesen auf die deutsche Patentanmeldung DE 10 2018 102 535.1 vom 05. Februar 2018, deren Inhalt hiermit durch Bezugnahme zum Gegenstand der vorliegenden Erfindung gehört.

Für die Umsetzung der Erfindung hat es sich als besonders vorteilhaft erwiesen, als Ultraschall-Sendesignal ein kurzes Pulssignal zu verwenden. Damit wird der maximale Spektralbereich abgedeckt. Allerdings weist ein Einzelpuls oder einige wenige Pulse eine zu geringe Energie auf, um auch noch in für Einparkvorgänge relevanten Entfernungsbereichen von einigen wenigen Metern ausreichend zuverlässig Echosignalabschnitte erkennen zu können. Daher ist es zweckmäßig, statt eines Einzelpulses Burstsendesignale zu verwenden. Hierbei hat es sich als vorteilhaft erwiesen, wenn das Ultraschall-Burstsendesignal 1 bis 20 oder 5 bis 15 oder 8 bis 12 Pulse aufweist.

In weiterer zweckmäßiger Ausgestaltung der Erfindung kann vorgesehen sein, dass die Transformation in den Frequenzbereich mittels einer Fouriertransformation, wie z.B. einer FFT, oder ohne Durchführung einer Fouriertransformation durch einen insbesondere aus der Signalverarbeitung eines Wetterradars bekannten Algorithmus (siehe z.B.

Richard J. Doviak, Dusan S. Zmic, Doppler Radar and Weather Observations (Second Edition) 1993, Pages 122-159) wie z.B. das Autokovarianzverfahren erfolgt.

Wie bereits oben beschrieben, werden unterschiedliche Typen von Hindernissen anhand der Bestimmung von Spektralmerkmalen identifiziert. Mittels an sich bekannter Klassifikatoren wie z.B. dem Gaussian-Naive-Bayes-Klassifikator, dem Nearest-Centroid-Klassifikator und dem k-Nearest-Neigbors Klassifikator (siehe z.B. R.O.Duda, P.E.Hart & D.G.Stork, Pattern Classification, Wiley, 654 Seiten, 2001) oder anderer an sich bekannter Verfahren der Mustererkennung (siehe z.B. S. Haykin, Neural Networks: a comprehensive foundation, Prentice Hall, 842 Seiten, 1998; T. Hastie, R. Tibshirani & J. Friedman, The elements of statistical learning, Springer, 533 Seiten, 2001; C.M.Bishop, Pattern recognition and machine learning; Springer, 738 Seiten, 2005; R.Rojas, Theorie der neuronalen Netze; Springer, ca. 300 Seiten, 1996) kann dann letztendlich der Typ von Hindernis bestimmt werden bzw. kann die Wahrscheinlichkeit angegeben werden, mit der ein Hindernis einem von mehreren vorbestimmten Typen von Hindernissen zugeordnet werden kann.

Die Erfindung wird nachfolgend anhand der Zeichnung näher erläutert. Dabei zeigen im Einzelnen:

Fig. 1   den Zeitverlauf eines Ultraschall-Empfangssignals mit ausgeprägten Echoabschnitten aufgrund einer Bodenschwelle in etwa 80 cm vom Empfänger entfernt, einem ausgeprägten Echoabschnitt aufgrund eines Pfahls in etwa 120 cm entfernt vom Ultraschallempfänger und einem ausgeprägten Echo aufgrund einer Wand in etwa 150 cm Entfernung vom Ultraschallempfänger,

Fig. 2   der Zeitverlauf eines extrahierten Echoabschnitts,

Fig. 3   ein Diagramm, in dem der spektrale Schwerpunkt extrahierter Echoabschnitte für die Hindernisse "Bodenschwelle", "Wand" und "Pfosten" aufgetragen ist, und zwar bei der Vermessung dieser Hindernisse in verschiedenen Abständen zum Ultraschallempfänger,

Fig. 4   ein Diagramm, in dem die spektrale Breite extrahierter Echoabschnitte für die Hindernisse "Bodenschwelle", "Wand" und "Pfosten" aufgetragen ist, und zwar bei der Vermessung dieser Hindernisse in verschiedenen Abständen zum Ultraschallempfänger, und

Fig. 5   eine Zusammenfassung der Diagramme der Fign. 3 und 4 als 2D-Diagramm für die im Rahmen von Versuchen vermessenden zuvor genannten Hindernisse, wobei deutlich wird, dass sich jeder Typ von Hindernis anhand der Lage der beiden zuvor genannten Spektralmerkmale innerhalb des 2D-Diagramms deutlich voneinander unterscheiden lässt.

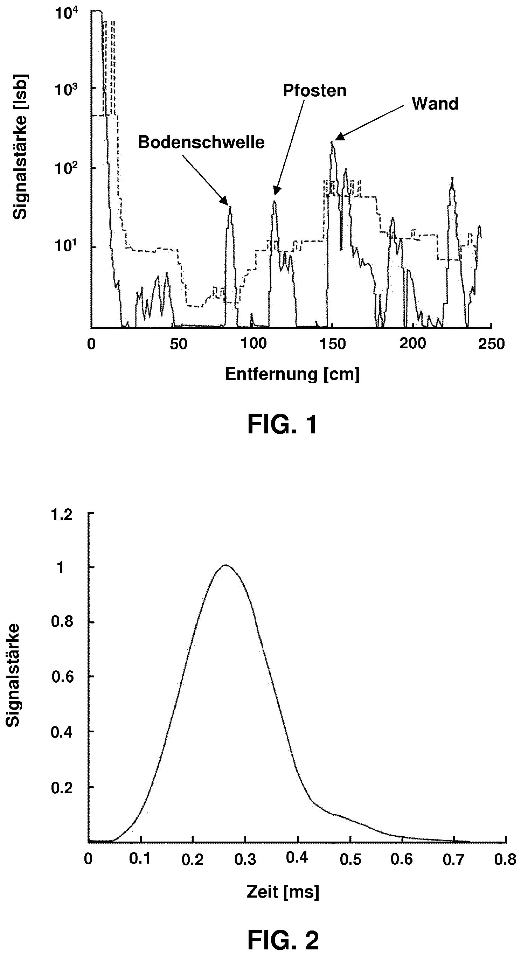

Wie bereits oben beschrieben, wurden im Rahmen der Erfindung Laborversuche unternommen, bei denen mit einem Ultraschall-Transducer Ultraschall-Burstsendesignale mit beispielsweise 8 Pulsen in einen Erfassungsbereich ausgesendet wurden, in dem sich ein Pfahl (75mm Rohr mit 1 m Höhe), ein nachgebildeter Normbordstein mit der Länge von 1 m sowie rechtwinklig zur Ausbreitungsrichtung der Ultraschallwellen ausgerichtet, und eine Wand befand. Diese Szene wurde vermessen, wobei sich beispielsweise der Zeitverlauf des Ultraschallempfangssignals gemäß Fig. 1 ergab. In Fig. 1 ist mit der durchgezogenen Linie das Ultraschall-Empfangssignal wiedergegeben, während als unterbrochene Linie ein Schwellwertsignal dargestellt ist. Zu erkennen sind drei charakteristische Echoabschnitte, nämlich für die Bodenschwelle (Normbordstein), für den Pfahl und für die Wand.

Fig. 2 zeigt beispielhaft den Verlauf eines aus dem Ultraschall-Empfangssignal extrahierten Echoabschnitts. Als Ultraschall-Burstsendesignal wurden 8 Pulse eingesetzt, was sich experimentell als guter Kompromiss herausgestellt hat. Die Detektion eines Echoabschnitts erfolgte anhand des Echomaximums. Links und rechts des Maximums wurden mehrere Abtastwerte gewählt (und zwar beispielhaft 8 Abtastwerte vor und 8 Abtastwerte nach dem Echomaximum). Anschließend erfolgte die Bestimmung des spektralen Schwerpunktes und der spektralen Breite des extrahierten Echosignalabschnitts. Aus der Literatur (z.B. Cite this chapter as: Keeler R.J., Passarelli R.E. (1990) Signal Processing for Atmospheric Radars. In: Atlas D. (eds) Radar in Meteorology. American Meteorological Society, Boston, MA) sind die Formelzusammenhänge für den spektralen Schwerpunkt und für die spektrale Breite wie folgt bekannt:

1. Klassifikationszahl (spektraler Schwerpunkt)

$$R(1) = \sum_{m=0}^{M-1} (I_m - jQ_m) \cdot (I_{m+1} + jQ_{m+1})$$

$$S1 = arctan\left(\frac{\Im(R)}{\Re(R)}\right)$$

2. Klassifikationszahl (spektrale Breite)

$$R(0) = \sum_{m=0}^{M-1} (I_m - jQ_m) \cdot (I_m + jQ_m)$$

$$S2 = \sqrt{1 - \left|\frac{R(1)}{R(0)}\right|}$$

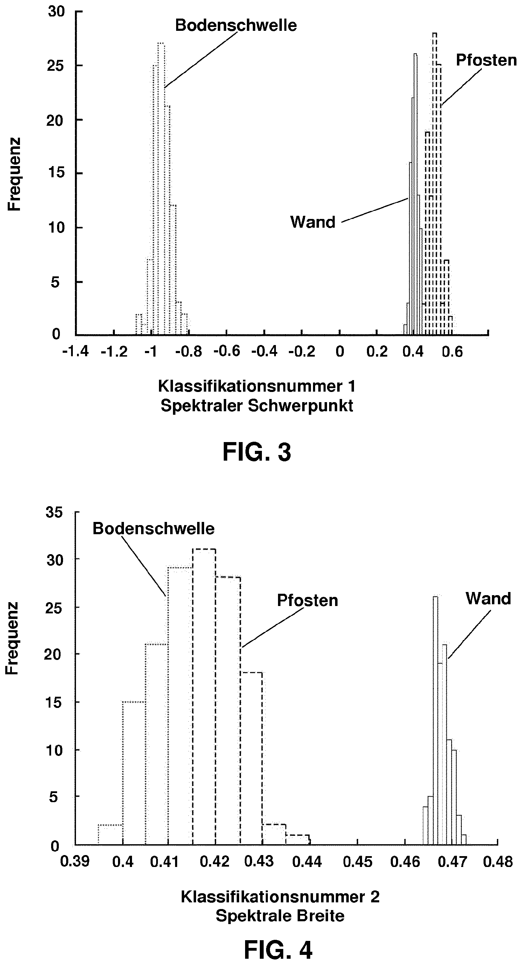

Die Fign. 3 und 4 geben die "Verteilung" der verschiedenen Messerergebnisse nach Berechnung der spektralen Schwerpunkte und der spektralen Breiten der Echosignalabschnitte für den Stopper, den Pfahl und für die Wand wieder. Anhand von Fig. 3 lässt sich erkennen, dass sich durch den spektralen Schwerpunkt ein Stopper deutlich unterscheiden lässt von einer Wand und einem Pfosten, wobei die Unterscheidung zwischen diesen beiden Hindernistypen nicht eindeutig ist. Dem gegenüber lässt sich anhand von Fig. 4 erkennen, dass die spektrale Breite benutzt werden kann, um eine Wand als Hindernis deutlich von einem Stopper und einem Pfahl zu unterscheiden, die Unterscheidung zwischen Stopper und Pfahl allerdings nicht eindeutig ist.

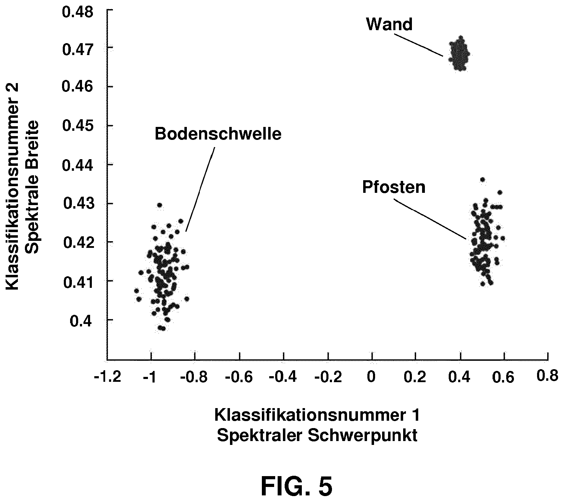

Fig. 5 schließlich zeigt, dass sich bei einer Betrachtung beider Spektralparameter alle drei Typen von Hindernissen gut voneinander unterscheiden lassen.

Wenn also diese Voruntersuchungen erfolgt sind und anschließend Feldversuche durchgeführt werden, so erkennt man, dass die Bestimmung der beiden Spektralmerkmale "Schwerpunkt" und "Breite" die Zuordnung eines Hindernisses zu einem der drei zuvor beschriebenen Typen möglich ist. Der tatsächliche Messpunkt aus spektralem Schwerpunkt und spektraler Breite eines vermessenden Echoabschnitts wird dabei mittels im Stand der Technik an sich bekannter Klassifikatoren schließlich einer der drei Hindernisklassen zugeordnet. Dabei kann dann auch die Wahrscheinlichkeit angegeben werden, mit der ein aktuell vermessendes Hindernis einer drei Klassen zugeordnet werden kann. Alternativ könnte man auch mehrere Wahrscheinlichkeiten angeben, um die Zuordnungswahrscheinlichkeiten eines Hindernisses zu mehreren Klassen anzugeben.

**Patentansprüche**

1. Verfahren zur Erkennung eines Hindernisses mit Hilfe von reflektierten Ultraschallwellen, insbesondere als Einparkhilfe für Fahrzeuge, mit den folgenden Schritten:

   - Aussenden eines Ultraschall-Burstsendesignals durch einen Ultraschallsender in einen zu überwachenden Erfassungsbereich
   - Empfangen eines von einem Hindernis im Erfassungsbereich reflektierten Ultraschallsignals durch einen Ultraschallempfänger als Ultraschall-Empfangssignal,
   - Detektieren mindestens eines auf ein Hindernis zurückzuführenden Echos im Ultraschall-Empfangssignal,
   - Transformieren des zum Echo gehörenden Echoabschnitts des Ultraschall-Empfangssignals aus dem Zeitbereich in den Frequenzbereich,
   - Untersuchen des Frequenzspektrums des Echoabschnitts auf das Vorhandensein mindestens eines von mehreren vorgegebenen Spektralmerkmalen, wobei jedes Spektralmerkmal für einen vorbestimmten Typ von Hindernissen und möglicherweise für mindestens einen von mehreren vorbestimmten Typen von Hindernissen repräsentativ ist, und
   - Zuordnen des Echoabschnitts zu einem vorbestimmten Typ von Hindernis.

2. Verfahren nach Anspruch 1, **dadurch gekennzeichnet, dass** ein Maß für die Wahrscheinlichkeit angegeben wird, mit der ein Echoabschnitt einem Typ von Hindernis zuzuordnen ist, oder dass mehrere Wahrscheinlichkeiten angegeben werden, mit denen ein Echoabschnitt verschiedenen Typen von Hindernissen zuzuordnen ist.

3. Verfahren nach Anspruch 1 oder 2, **dadurch gekennzeichnet, dass** ein erkanntes Hindernis optisch und/oder akustisch und/oder taktil signalisiert wird und dass die Signale für vorbestimmte Typen von Hindernissen unterschiedlich sind.

4.  Verfahren nach einem der Ansprüche 1 bis 3, **dadurch gekennzeichnet, dass** zu den Spektralmerkmalen der spektrale Schwerpunkt und die spektrale Breite des Frequenzenspektrums eines Echoabschnitts zählen.

5.  Verfahren nach einem der Ansprüche 1 bis 4, **dadurch gekennzeichnet, dass** verschiedene Typen von unterscheidbaren Hindernissen als einen ersten Typ einen Bordstein und eine Bodenschwelle, als einen zweiten Typ eine Wand und ein Fahrzeug und als einen dritten Typ einen Pfosten und einen Pfahl, insbesondere einen Hinweisschild-, Lichtzeichen- oder Laternenpfahl umfassen.

6.  Verfahren nach einem der Ansprüche 1 bis 5, **dadurch gekennzeichnet, dass** die Sensitivität des Ultraschallempfängers temperaturabhängig ist und dass die Detektion eines Echoabschnitts und dessen Transformation in den Frequenzbereich temperaturkompensiert oder temperaturkorrigiert oder in anderer Weise unter Berücksichtigung der aktuellen Temperatur des Ultraschallempfängers erfolgt.

7.  Verfahren nach Anspruch 6, **dadurch gekennzeichnet, dass** die Temperatur des Ultraschallempfängers messtechnisch oder anhand einer temperaturabhängigen signaltechnischen Eigenschaft ermittelt wird, bezüglich der der Ultraschallempfänger kalibriert ist und auf die das Ultraschallempfangsignal hin untersucht wird.

8.  Verfahren nach einem der Ansprüche 1 bis 7, **dadurch gekennzeichnet, dass** das Ultraschall-Burstsendesignal 1 bis 20 oder 5 bis 15 oder 8 bis 12 Pulse aufweist.

9.  Verfahren nach einem der Ansprüche 1 bis 8, **dadurch gekennzeichnet, dass** die Transformation in den Frequenzbereich mittels einer Fouriertransformation, wie z.B. einer FFT, oder ohne Durchführung einer Fouriertransformation durch einen insbesondere aus der Signalverarbeitung eines Wetterradars bekannten Algorithmus wie z.B. das Autokovarianz-Verfahren erfolgt.

10. Verfahren nach Anspruch 1 bis 9, **dadurch gekennzeichnet, dass** die Zuordnung eines Echoabschnitts zu einem Typ von Hindernis mittels an sich bekannter Klassifikatoren oder anderer an sich bekannter Verfahren der Mustererkennung erfolgt.

**Claims**

1.  A method for detecting an obstacle by means of reflected ultrasonic waves, particularly as a park assistance for vehicles, comprising:

    - transmitting an ultrasonic burst transmission signal by means of an ultrasonic transmitter to a detection area to be observed;
    - receiving an ultrasonic signal reflected by an obstacle in the detection area by means of an ultrasonic receiver as an ultrasonic reception signal;
    - detecting at least one echo in the ultrasonic reception signal resulting from an obstacle;
    - transforming the echo section of the ultrasonic reception signal belonging to the echo from the time domain into the frequency domain;
    - examining the frequency spectrum of the echo section for the presence of at least one of a plurality of predetermined spectral characteristics, wherein each spectral characteristic is representative of a predetermined obstacle type and possibly of at least one of a plurality of predetermined obstacle types; and
    - allocating the echo section to a predetermined obstacle type.

2.  The method according to claim 1, **characterized in that** a degree of probability is specified with which an echo section can be allocated to an obstacle type, or **in that** a plurality of probabilities is specified with which an echo section can be allocated to different obstacle types.

3.  The method according to claim 1 or 2, **characterized in that** a detected obstacle is signalized optically and/or acoustically and/or tactilely, and **in that** the signals are different for predetermined obstacle types.

4.  The method according to any one of the claims 1 to 3, **characterized in that** the spectral characteristics include the spectral center of gravity and the spectral width of the frequency spectrum of an echo section.

5. The method according to any one of the claims 1 to 4, **characterized in that** different types of distinguishable obstacles comprise as a first type a curb and a bump, as a second type a wall and a vehicle, and as a third type a post and a pile, particularly piles for information and traffic signs, traffic lights or street lights.

6. The method according to any one of the claims 1 to 5, **characterized in that** the sensitivity of the ultrasonic receiver is temperature-dependent, and **in that** the detection of an echo section and its transformation into the frequency domain is temperature-compensated or temperature-corrected or otherwise carried out by taking into account the current temperature of the ultrasonic receiver.

7. The method according to claim 6, **characterized in that** the temperature of the ultrasonic receiver is determined by means of measurement or by means of a temperature-dependent signal characteristic, with regard to which the ultrasonic receiver is calibrated and for which the ultrasonic reception signal is examined.

8. The method according to any one of the claims 1 to 7, **characterized in that** the ultrasonic burst transmission signal comprises one to twenty or five to fifteen or eight to twelve pulses.

9. The method according to any one of the claims 1 to 8, **characterized in that** the transformation into the frequency domain is carried out by means of a Fourier transform, e.g. an FFT, or without performing a Fourier transform by means of an algorithm particularly known from signal processing of a weather radar, such as for example the auto-covariance procedure.

10. The method according to any one of the claims 1 to 9, **characterized in that** the allocation of an echo section to an obstacle type is carried out by means of known classifiers or other known procedures of pattern recognition.

**Revendications**

1. Procédé de reconnaissance d'un obstacle à l'aide d'ondes ultrasonores réfléchies, en particulier en tant qu'aide au stationnement pour véhicules, avec les étapes suivantes :

   - émission d'un signal d'émission ultrasonore en rafale par un émetteur d'ultrasons dans une zone de saisie à contrôler
   - réception d'un signal ultrasonore réfléchi par un obstacle dans la zone de saisie par un récepteur d'ultrasons en tant que signal de réception ultrasonore,
   - détection d'au moins un écho dû à un obstacle dans le signal de réception ultrasonore,
   - transformation de la section d'écho du signal de réception ultrasonore appartenant à l'écho du domaine temporel dans le domaine fréquentiel,
   - recherche dans le spectre de fréquences de la section d'écho de la présence d'au moins une parmi plusieurs caractéristiques spectrales prédéfinies, dans lequel chaque caractéristique spectrale est représentative pour un type prédéterminé d'obstacles et autant que possible pour au moins un parmi plusieurs types prédéterminés d'obstacles, et
   - association de la section d'écho à un type prédéterminé d'obstacle.

2. Procédé selon la revendication 1, **caractérisé en ce qu'**est donnée une mesure de la probabilité avec laquelle une section d'écho est à associer avec un type d'obstacle ou **en ce que** sont données plusieurs probabilités avec lesquelles une section d'écho est à associer avec différents types d'obstacles.

3. Procédé selon la revendication 1 ou 2, **caractérisé en ce qu'**un obstacle reconnu est signalé de manière optique et/ou acoustique et/ou tactile et **en ce que** les signaux sont différents pour des types prédéterminés d'obstacles.

4. Procédé selon l'une des revendications 1 à 3, **caractérisé en ce que** le barycentre spectral et la largeur spectrale du spectre de fréquence d'une section d'écho comptent parmi les caractéristiques spectrales.

5. Procédé selon l'une des revendications 1 à 4, **caractérisé en ce que** différents types d'obstacles différenciables comprennent comme premier type une bordure et un ralentisseur, comme deuxième type un mur et un véhicule et comme troisième type un montant et un poteau, en particulier un poteau de panneau de signalisation, de feu de circulation ou d'éclairage public.

6. Procédé selon l'une des revendications 1 à 5, **caractérisé en ce que** la sensibilité du récepteur d'ultrasons est fonction de la température et **en ce que** la détection d'une section d'écho et sa transformation en une gamme de fréquences s'effectue de manière compensée en température ou corrigée en température ou en prenant en compte d'une autre façon la température actuelle du récepteur d'ultrasons.

7. Procédé selon la revendication 6, **caractérisé en ce que** la température du récepteur d'ultrasons est déterminée de manière métrologique ou à l'aide d'une propriété de signal dépendant de la température, le récepteur d'ultrasons est étalonné par rapport à celle-ci et le signal de réception ultrasonore est analysé à partir de celle-ci.

8. Procédé selon l'une des revendications 1 à 7, **caractérisé en ce que** le signal d'émission ultrasonore en rafale comporte 1 à 20 ou 5 à 15 ou 8 à 12 impulsions.

9. Procédé selon l'une des revendications 1 à 8, **caractérisé en ce que** la transformation dans la gamme de fréquences s'effectue au moyen d'une transformation de Fourier, comme par exemple une FFT, ou sans mise en œuvre d'une transformation de Fourier par un algorithme en particulier connu du traitement de signal d'un radar météorologique comme par exemple le procédé d'auto-covariance.

10. Procédé selon la revendication 1 à 9, **caractérisé en ce que** l'association d'une section d'écho à un type d'obstacle s'effectue au moyen de classificateurs connus ou d'autres procédés connus de la reconnaissance de modèle.

**FIG. 1**

**FIG. 2**

**FIG. 3**

**FIG. 4**

FIG. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10027828 A
- DE 19846241 A
- DE 102018102535

**In der Beschreibung aufgeführte Nicht-Patentliteratur**

- **RICHARD J. DOVIAK ; DUŠAN S. ZMIC.** *Doppler Radar and Weather Observations,* 1993, 122-159
- **R.O.DUDA ; P.E.HART ; D.G.STORK.** Pattern Classification. Wiley, 2001, 654
- **S. HAYKIN.** Neural Networks: a comprehensive foundation. Prentice Hall, 1998, vol. 842
- **T. HASTIE ; R. TIBSHIRANI ; J. FRIEDMAN.** The elements of statistical learning. Springer, 2001, 533
- **C.M.BISHOP.** Pattern recognition and machine learning. Springer, 2005, 738
- **R.ROJAS.** Theorie der neuronalen Netze. Springer, 1996, 300
- Signal Processing for Atmospheric Radars. **KEELER R.J. ; PASSARELLI R.E.** Radar in Meteorology. American Meteorological Society, 1990